# EUROPEAN PATENT SPECIFICATION

(11) **EP 1 250 240 B1**
(45) Date of publication and mention of the grant of the patent: **21.02.2007**
(21) Application number: 01902485.0
(22) Date of filing: 25.01.2001
(51) Int. Cl.: B60J 10/02, B60J 10/00

(54) **BONDING OF GLAZING PANELS**
VERBINDEN VON GLASSCHEIBEN
PROCEDE DE FIXATION DE VITRES

(30) Priority: 25.01.2000 GB 0001657
(43) Date of publication of application: 23.10.2002
(73) Proprietor: Carglass Luxembourg Sarl - Zug Branch, 6300 Zug (CH)
(72) Inventor: DAVIES, Christopher, Kidwelly, Carmarthenshire SA17 4T4 (GB); CLEMENT, Robert, Marc, Pontardawe SA8 3HD (GB)
(74) Representative: Davies, Gregory Mark
(86) International application number: PCT/GB2001/000316
(87) International publication number: WO 2001/054937

(56) References cited:
- EP-A- 0 767 149
- US-A- 3 388 945
- US-A- 4 555 607
- US-A- 5 064 494
- US-A- 5 948 194
- US-A- 6 001 204

## Description

The present invention relates to bonding of glazing panels, and in particular to bonding of vehicular glazing panels such as windshields (windscreens), rear window panels and side window panels.

Conventionally, glazing panels (whether for architectural or vehicular use) may be bonded to supporting frames by means of bonding material interposed between the frame and the glazing panel. The bonding material is typically applied as a bead around the periphery of the panel or frame in relatively softened condition; subsequently the bonding material cures (hardens) to hold the glazing panel securely bonded in the frame.

Polyurethane materials are frequently used for the bonding material. A commonly used polyurethane bonding material for glazing panels in vehicular applications is of a type which cures in the presence of moisture . Typically times for known moisture cure polyurethane bonding materials to cure sufficiently (especially to reach permitted drive away time strength) following fitting or replacement of vehicular glazing panels, can be up to four hours, particularly where humidity is low such as is the case in cold weather conditions.

Heat curable bonding materials are now available.

An exemplary prior art technique is disclosed in US-A-5064494 in which microwave energy is used to cure heat curable bonding polyurethane between the periphery of a glazing panel and a frame. In the technique disclosed a radiation element is moved along the entire edge of the windscreen so as to bring about curing of the bonding material.

According to the invention, there is provided a method of fitting a glazing panel in a frame, the method comprising:
i) applying heat curable bonding material in a relatively softened state about the periphery of the glazing panel or the frame;
ii) placing the glazing panel in register with the frame with the bonding material interposed therebetween;
iii) setting up a microwave energy field acting on a localised volume of the bonding material with the glazing panel in situ, the microwave energy field being activated for a predetermined duration such that substantial curing to at least 80% of complete curing of the localised volume of bonding material is effected during the duration of activation of the microwave energy field; and
iv) moving the microwave energy field about the glazing panel periphery to effect localised curing of successive spaced portions of bonding material, thereby to effect substantially complete curing of the bonding material bonding the glazing panel to the frame.

The microwave energy field promotes heating of the bonding material and hence curing of the heat curable bonding material.

Desirably, the microwave energy field is substantially uniform through the bonding material. This promotes substantially uniform heating of the bonding material throughout the body of the material which results in uniform curing rate and avoids localised "hot spots".

A microwave energy field is found to be particularly efficient in producing rapid and thorough curing throughout a localised volume of the bonding material.

It is preferred that the energy is supplied over a predetermined period at a predetermined intensity, in order to supply a finite amount of energy. The duration of the energy supply is preferably substantially at or below 90 seconds per curing exposure (more preferably at or below 60 seconds per curing exposure, most preferably at or below 40 to 50 seconds).

The bonding material preferably comprises a polyurethane material.

The invention will now be further described with reference to the following examples:

### Example 1

A bonding bead of heat curable polyurethane in a softened state at ambient conditions was applied around a vehicle frame opening for receiving a windscreen. A windscreen was subsequently placed in register with the bead. A microwave waveguide was held adjacent the windscreen in the region of the bonding bead and microwave radiation supplied to generate substantially uniform microwave energy field of approximately .0.46 wattcm⁻³ intersecting a localised volume of the bonding bead of approximately 10cm³.

Energy at the level specified was supplied to the localised 10cm³ volume of the bead for approximately 45 seconds resulting in approximate total energy supplied to the localised volume of approximately 22 Joules. Using the parameters specified it is estimated that immediately following removal of the microwave field the localised portion of the bonding bead was approximately 80% cured becoming fully cured (with no further supply of energy) after 2 minutes.

Immediately following the 45 second exposure the waveguide was moved to supply microwave energy to an adjacent localised volume of the bonding bead. Successively exposing localised volumes and advancing the waveguide about the periphery resulted in the entire length of the bonding bead around the periphery of the glazing panel being cured.

### Example 2

The technique used was identical to that described in Example 1, excepting that exposure of localised 10cm³ volumes of the bead was for 60 seconds. This resulted in full curing of the respective localised volume.

## Claims

1. A method of fitting a glazing panel in a frame, the method comprising:
i) applying heat curable bonding material in a relatively softened state about the periphery of the glazing panel or the frame;
ii) placing the glazing panel in register with the frame with the bonding material interposed therebetween;
iii) setting up a microwave energy field acting on a localised volume of the bonding material with the glazing panel in situ, the microwave energy field being activated for a predetermined duration such that substantial curing to at least 80% of complete curing of the localised volume of bonding material is effected during the duration of activation of the microwave energy field; and
iv) moving the microwave energy field about the glazing panel periphery to effect localised curing of successive spaced portions of bonding material, thereby to effect substantially complete curing of the bonding material bonding the glazing panel to the frame.

2. A method according to claim 1, wherein the energy field is substantially uniform through the bonding material.

3. A method according to any preceding claim, wherein the microwave energy is directed by a microwave waveguide.

4. A method according to any preceding claim, wherein the duration of the energy supply is substantially at or below 60 seconds per curing exposure.

5. A method according to any preceding claim, wherein the energy field is localised to act upon a localised volume of bonding material.

6. A method according to any preceding claim, wherein the bonding material comprises a polyurethane material.

7. A method according to any preceding claim, wherein the energy applied generates a substantially uniform energy field of 0.046 wattcm⁻³ ± 20%.

8. A method according to claim 7, wherein the energy applied generates a substantially uniform energy field of 0.046 wattcm⁻³ ± 10%.

9. A method according to any preceding claim, wherein the localised volume to which the energy field is applied is approximately 10cm³ ± 10%.

10. A method according to any preceding claim, wherein the energy field is applied for a time substantially in the range 30 seconds to 60 seconds.

11. A method according to claim 10, wherein the energy field is applied for a time substantially in the range 40 seconds to 50 seconds.

12. A method according to any preceding claim, wherein the glazing panel comprises a vehicular glazing panel.

## Patentansprüche

1. Verfahren zum Einsetzen einer Verglasungsplatte in einen Rahmen mit folgenden Schritten:
i) Zuführen eines wärmeaushärtenden Klebstoffes in einem verhältnismäßig weichen Zustand um den Umfang der Verglasungsplatte oder um den Rahmen,
ii) ausgerichtetes Einlegen der Verglasungsplatte in den Rahmen mit dazwischen liegendem Klebstoff,
iii) Anwenden eines Mikrowellenenergiefeldes auf ein örtliches Volumen des Klebstoffes mit der Verglasungsplatte in situ, wobei das Mikrowellenenergiefeld für einen solchen vorbestimmten Zeitraum aktiviert wird, dass eine Aushärtung im wesentlichen zu mindestens 80 % einer kompletten Aushärtung des örtlichen Volumens des Klebstoffes während der Dauer der Aktivierung des Mikrowellenenergiefeldes erfolgt, und
iv) Bewegen des Mikrowellenenergiefeldes um den Umfang der Verglasungsplatte, um eine örtliche Aushärtung von aufeinander folgenden Abschnitten des Klebstoffes durchzuführen und hierdurch ein im wesentlichen vollständiges Aushärten des Klebstoffes zum Einkleben der Verglasungsplatte in den Rahmen zu veranlassen.

2. Verfahren nach Anspruch 1, **dadurch gekennzeichnet, dass** das Energiefeld sich im wesentlichen gleichmäßig durch den Klebstoff verteilt.

3. Verfahren nach einem oder mehreren der vorhergehenden Ansprüche, **dadurch gekennzeichnet, dass** die Mikrowellenenergie durch einen Mikrowellenhohlleiter geführt wird.

4. Verfahren nach einem oder mehreren der vorhergehenden Ansprüche, **dadurch gekennzeichnet, dass** die Dauer der Energiezuführung im wesentlichen 60 Sekunden oder weniger pro Anwendung beträgt.

5. Verfahren nach einem oder mehreren der vorhergehenden Ansprüche, **dadurch gekennzeichnet, dass** das Energiefeld örtlich begrenzt ist, um auf ein örtliches Klebstoffvolumen zu wirken.

6. Verfahren nach einem oder mehreren der vorhergehenden Ansprüche, **dadurch gekennzeichnet, dass** der Klebstoff ein Polyurethan-Material enthält.

7. Verfahren nach einem oder mehreren der vorhergehenden Ansprüche, **dadurch gekennzeichnet, dass** die zugeführte Energie ein im wesentlichen gleichmäßiges Energiefeld von 0,046 Watt · cm⁻³ ± 20% ist.

8. Verfahren nach Anspruch 7, **dadurch gekennzeichnet, dass** die zugeführte Energie ein im wesentlichen gleichmäßiges Energiefeld von 0,046 Watt · cm⁻³ ±10% ist.

9. Verfahren nach einem oder mehreren der vorhergehenden Ansprüche, **dadurch gekennzeichnet, dass** das örtliche Volumen, dem das Energiefeld zugeführt wird, etwa 10 cm³ ± 10% beträgt.

10. Verfahren nach einem oder mehreren der vorhergehenden Ansprüche, **dadurch gekennzeichnet, dass** das Energiefeld für eine Zeit von im wesentlichen 30 bis 60 Sekunden zugeführt wird.

11. Verfahren nach Anspruch10, **dadurch gekennzeichnet, dass** das Energiefeld für eine Zeit von im wesentlichen 40 bis 50 Sekunden zugeführt wird.

12. Verfahren nach einem oder mehreren der vorhergehenden Ansprüche, **dadurch gekennzeichnet, dass** die Verglasungsplatte eine Fahrzeugverglasungsplatte enthält.

## Revendications

1. Procédé pour monter un panneau de vitre dans un châssis, le procédé comprenant les étapes consistant à :
i) appliquer le matériau de liaison thermodurcissable dans un état relativement ramolli autour de la périphérie du panneau de vitre ou du châssis ;
ii) placer le panneau de vitre en coïncidence avec le châssis avec le matériau de liaison interposé entre eux ;
iii) régler un champ d'énergie à micro-ondes agissant sur un volume localisé du matériau de liaison avec le panneau de vitre in situ, le champ d'énergie à micro-ondes étant activé pour une durée prédéterminée de sorte qu'un durcissement substantiel à au moins 80 % du durcissement complet du volume localisé du matériau de liaison est effectué pendant la durée d'activation du champ d'énergie à micro-ondes ; et
iv) déplacer le champ d'énergie à micro-ondes autour de la périphérie du panneau de vitre pour effectuer le durcissement localisé des parties espacées successives du matériau de liaison, pour effectuer ainsi le durcissement sensiblement complet du matériau de liaison reliant le panneau de vitre au châssis.

2. Procédé selon la revendication 1, dans lequel le champ d'énergie est sensiblement uniforme à travers le matériau de liaison.

3. Procédé selon l'une quelconque des revendications précédentes, dans lequel l'énergie à micro-ondes est dirigée par un guide d'onde de micro-ondes.

4. Procédé selon l'une quelconque des revendications précédentes, dans lequel la durée de l'alimentation en énergie est sensiblement de ou inférieure à 60 secondes par exposition de durcissement.

5. Procédé selon l'une quelconque des revendications précédentes, dans lequel le champ d'énergie est localisé pour agir sur un volume localisé de matériau de liaison.

6. Procédé selon l'une quelconque des revendications précédentes, dans lequel le matériau de liaison comprend un matériau de polyuréthane.

7. Procédé selon l'une quelconque des revendications précédentes, dans lequel l'énergie appliquée génère un champ d'énergie sensiblement uniforme de 0,046 wattcm⁻³ ± 20%.

8. Procédé selon la revendication 7, dans lequel l'énergie appliquée génère un champ d'énergie sensiblement uniforme de 0,046 wattcm⁻³ ± 10%.

9. Procédé selon l'une quelconque des revendications précédentes, dans lequel le volume localisé auquel le champ d'énergie est appliqué est d'approximativement 10 cm³ ± 10 %,

10. Procédé selon l'une quelconque des revendications précédentes, dans lequel le champ d'énergie est appliqué pendant un temps sensiblement de l'ordre de 30 secondes à 60 secondes.

11. Procédé selon la revendication 10, dans lequel le champ d'énergie est appliqué pendant un temps sensiblement de l'ordre de 40 secondes à 50 secondes.

12. Procédé selon l'une quelconque des revendications précédentes, dans lequel le panneau de vitre comprend un panneau de vitre de véhicule.
